Europäisches Patentamt

European Patent Office

Office européen des brevets

(11) Publication number: **0 055 227**
**B1**

# (12) EUROPEAN PATENT SPECIFICATION

(45) Date of publication of patent specification: **24.04.85**

(51) Int. Cl.⁴: **B 60 Q 1/14**

(21) Application number: **81830208.5**

(22) Date of filing: **26.10.81**

(54) **Automatic headlight beam switching device for automotive vehicles.**

(30) Priority: **19.12.80 IT 662980**

(43) Date of publication of application:
**30.06.82 Bulletin 82/26**

(45) Publication of the grant of the patent:
**24.04.85 Bulletin 85/17**

(84) Designated Contracting States:
**DE FR GB NL SE**

(56) References cited:
**WO-A-81/03307**
**CH-A- 571 416**
**CH-A- 578 961**
**FR-A-2 330 265**
**GB-A-1 529 523**

(73) Proprietor: **Di Fazio, Giuseppe**
**Via Venezia 36**
**I-95046 Palagonia (Catania) (IT)**

(72) Inventor: **Di Fazio, Giuseppe**
**Via Venezia 36**
**I-95046 Palagonia (Catania) (IT)**

(74) Representative: **Rosen, Earl A. et al**
**c/o Società Italiana Brevetti 42 Piazza Poli**
**I-00187 Roma (IT)**

Courier Press, Leamington Spa, England.

## Description

It is known that, so far, in order to change the headlights of an automotive vehicle from the high to low position a lever switch is used which is manually actuated and placed on the column of the steering wheel.

It is obvious that this manual switching solution is uncomfortable being as it is continuously required to pass from a position of high beams lights, every time another vehicle is encountered, to a position of low beam lights.

It is therefore the object of this invention to eliminate the inconvenience of manuality existing today in switching headlight beams in an automotive vehicle, making this operation totally automatic by controlling the headlights through an electronic device.

There are known from the prior art devices for automatically switching on the illumination system of a motor vehicle upon occuring of dark conditions.

In Swiss patent CH—A—578 961 a device is described comprising a photocell connected in a Wheatstone bridge which senses a light absence. A light absence unbalances the Wheatstone bridge and an unbalancing signal is directed to an operational amplifier, the output of which controls the base of a transistor which in turn controls a relay for closing the contacts of a switch of a general illumination system.

In European application WO—A—81/03 307 a device is described wherein a photocell is connected in a Wheatstone bridge, the output of which feeds an operational amplifier and drives a transistor which in turn drives a second transistor which, when turned on, powers the circuit of a relay which switches the illumination installation on. Again in this publication the Wheatstone bridge is unbalanced upon occuring of dark conditions.

From the above publications it is clear that what is concerned with, is to obtain that the device is not continuously switched on and off when the photocell, while in a general situation of darkness, is temporarily hit by the lights of other passing cars or by other light sources which only for a short time interrupt the darkness condition. There is therefore provided a system for delaying a switch off and eliminating this drawback.

It does not appear from the above publications any automatic system for switching power from the high beams to the low beams.

Moreover, in both said publications a Wheatstone bridge is used which is so arranged as to be at balance when the sensing photocell is hit by light and unbalanced when light is not sensed by said photocell.

The present invention comprises an automatic head light beam switching device for automatically switching power to the high or low beams in automotive vehicles.

With regard to the prior art document WO—A—81/03 307 which describes already a switching device including a photocell connected in a Wheatstone bridge, an operational amplifier for amplifying an output signal from said bridge when the latter is unbalanced, a first transistor turned on by an output signal from said operational amplifier and turned off when no output signal is produced by said operational amplifier, and a second transistor connected in the energizing circuit of a relay, the present invention is characterised in that said Wheatstone bridge is at balance when said cell is not exposed to light radiation and said relay is a double switching relay having change-over contacts which, when energised, closes contacts for powering the high beam circuit and opens contacts for de-powering the low beam circuit and which, when de-energised, opens the contacts of the high beams and closes the contacts of the low beams, said second transistor being turned on to energize said relay when said first transistor is turned off, and said transistor being turned off to de-energize said relay when said first transistor is turned on, whereby, when said photocell is exposed to light radiation from a vehicle coming from the opposite direction the Wheatstone bridge is unbalanced and the headlights are automatically switched from high to low beams.

The invention will be further illustrated with reference to the single drawing enclosed herein, in which:

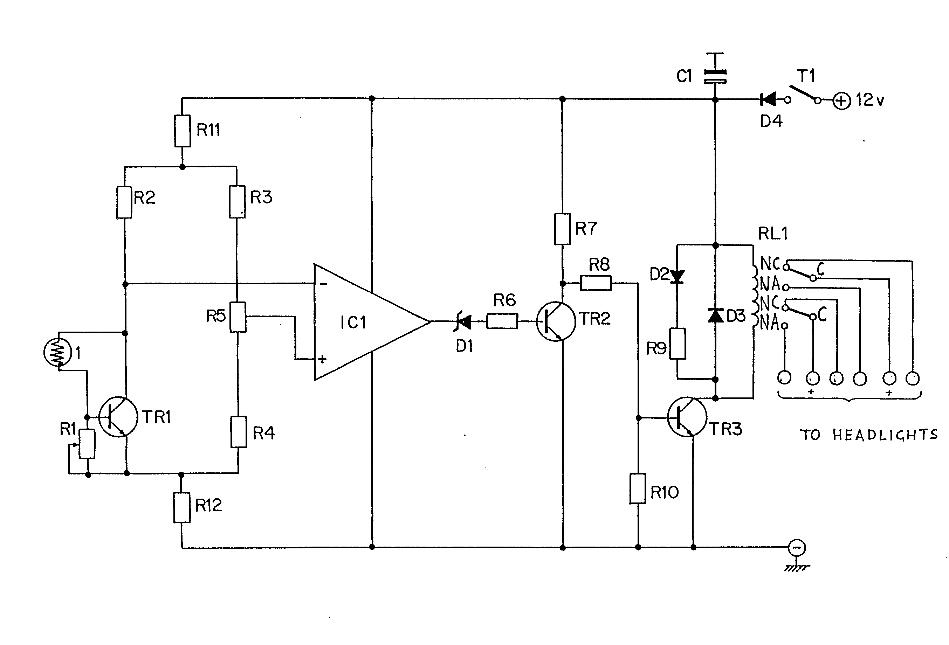

Fig. 1 shows the electrical diagram of the device according to the invention in a preferred embodiment thereof.

With reference to the drawing, the common contact C of the double-switching relay RL1, is connected to the voltage coming from the lever switch (not shown) of the headlights. The relay RL1 has change-over contacts NC and NA. In the NC position of the relay RL1 the wires are connected which power the low light filament of the headlight lamps while in the position NA of relay RL1 the wires are connected which power the high beam filaments.

This arrangement of the contacts of the relay RL1 makes it so that when the device is powered and the headlights are in the low position, said relay is excited and contact C closes with contact NA thus powering the high beam while, if contact C closes with contact NC the low beam will be powered.

Still referring to the drawing, it may be seen furthermore, that the device is formed by a photocell 1 and a transistor TR1, by a Wheatstone bridge R2, R3, R4, an operational amplifier IC1 connected as an inverting comparator the output of which drives, through diode D1, a transistor TR2 which in turn controls the double-switching RL1 relay via a second transistor TR3 connected in the energising circuit of the relay RL1.

Every time it is hit by the light, the photocell 1 alters its resistance polarizing transistor TR1 which amplifies the current which it receives from said photocell 1 thus altering the Wheatstone bridge arm (arm of R2) in which it is connected. The variable resistance R1 serves the purpose of adjusting the sensitivity of the device.

It should be noted here that the entire group of the circuit forming the Wheatstone bridge is formed by fixed resistance R2, by the sensitive group of the photocell 1 and TR1, by fixed resistor R3 and by resistor R5 which is a variable resistance (in series with resistance (R4) which controls the switching level of operational amplifier IC1 the output of which, through diode D1 drives transistor TR2 which in turn actuates the relay RL1 via the second transistor TR3, so that this latter is turned off to de-energize the relay RL1 when the first transistor TR2 is turned on.

Operation of the device according to the invention is as follows:

Every time the light of the headlights of a vehicle moving in the opposite direction of the vehicle equipped with the device according to the invention hits the photocell 1, the latter through the Wheatstone bridge, the integrated circuit IC1 and transistor TR2 automatically switches the position of the headlights from high to low, restoring, in the vehicle equipped with the device, the position of the headlights again to high as soon as the vehicle moving in the opposite direction has passed on.

All this, as previously stated, takes place in a totally automatic way thus avoiding the driver the annoying, and often forgotten, operation of turning down the headlights when encountering another vehicle.

Finally the device according to the invention also provides for maintaining the old manual switch operation which may be reinserted by actuating the specially provided switch T1.

The invention has been described according to a preferred embodiment which is not to be intended as limiting but only for purposes of example.

## Claims

1. An automatic head light beam switching device for automatically switching power to the high or low beams in automotive vehicles, including a photocell (1) connected in a Wheatstone bridge ($R_2$, $R_3$, $R_4$), an operational amplifier (IC1) for amplifying an output signal from said bridge when the latter is unbalanced, a first transistor (TR2) turned on by an output signal from said operational amplifier and turned off when no output signal is produced by said operational amplifier, and a second transistor (TR3) connected in the energizing circuit of a relay (RL1), characterized in that said Wheatstone bridge is at balance when said cell is not exposed to light radiation and said relay is a double switching relay (RL1) having change-over contacts (NA, NC), which, when energised, closes contacts (NA) for powering the high beam circuit and opens contacts (NC) for de-powering the low beam circuit and which, when de-energised, opens the contacts (NA) of the high beams and closes the contacts (NC) of the low beams, said second transistor (TR3) being turned on to energise said relay (RL1) when said transistor (TR2) is turned off, and said transistor (TR3) being turned off to de-energize said relay (RL1) when said first transistor (TR2) is turned on, whereby, when said photocell (1) is exposed to light radiation from a vehicle coming from the opposite direction the Wheatstone bridge is unbalanced and the headlights are automatically switched from high to low beams.

2. The device according to claim 1, further comprising a third transistor (TR1) having the base and the collector respectively connected to one end of said photocell (1), and the emitter connected to said Wheatstone bridge ($R_2$, $R_3$, $R_4$), so that the balance of said bridge is modified only when the electrical resistance of said photocell falls below a given threshold level, upon exposure to light radiation.

## Revendications

1. Un dispositif automatique de commutations des phares pour commuter automatiquement l'énergie électrique aux feux anti-éblouissants ou aux feux à longue portée dans des véhicules automobiles, comprenant une cellule photoélectrique (1) reliée à un pont de Wheatstone ($R_2$, $R_3$, $R_4$), un amplificateur opérationnel (IC1) pour amplifier un signal de sortie du-dit pont lorsque ce dernier est déséquilibré, un premier transistor (TR2) fermé par un signal de sortie du dit amplificateur opérationnel et ouvert lorsque aucun signal de sortie n'est produit par le dit amplificateur opérationnel, et un second transistor (TR3) relié au circuit d'énergisation d'un relais (RL1), caractérisé en ce que ledit pont de Wheatstone est équilibré lorsque ladite cellule n'est pas exposée à la radiation lumineuse et ledit relais est un double relais de commutation (RL1) présentant des contacts de commutation (NA, NC), qui, lorsqu'il est énergisé, ferme les contacts (NA) pour alimenter le circuit des feux à longue portée et ouvre les contacts (NC) pour ouvrir le circuit des feux anti-blouissants et qui, lorsqu'il est désénergisé, ouvre les contacts (NA) des feux à longue portée et ferme les contacts (NC) des feux antiéblouissants, ledit second transistor (TR3) étant fermé pour énergiser ledit relais (RL1) quand ledit transistor (TR2) est ouvert, et ledit transistor (TR3) étant ouvert pour désénergiser ledit relais (RL1) quand ledit premier transistor (TR2) est fermé, de sorte que lorsque ladite cellule photoélectrique (1) est exposée à la radiation lumineuse d'un véhicule provenant de la direction opposée, le pont de Wheatstone est déséquilibré et les phares sont automatiquement commutés des feux à longue portée à ceux antiéblouissants.

2. Le dispositif selon la revendication 1, comprenant en outre un troisième transistor (TR1) ayant sa base et son collecteur reliés respectivement à une borne de ladite cellule photoélectrique (1), et son émetteur relié audit pont de Wheatstone ($R_2$, $R_3$, $R_4$), de sorte que l'équilibre du pont est modifié seulement dès que la résistance électrique de la cellule photoélectrique descend au-dessous d'un certain niveau de seuil suite à une exposition à la radiation luminesue.

## Patentansprüche

1. Ein automatisches Scheinwerferschaltegeraet, um die Scheinwerfer in Fahrzeugen automatisch zu Fernlicht oder zu Abblendlicht zu kommutieren, wobei das Scheinwerferschaltegeraet eine mit einer Wheatstonebruecke ($R_2$, $R_3$, $R_4$), verbundene Fotozelle (1), einen Operationsverstaerker (IC1), welcher ein Ausgangssignal von der Bruecke verstaerkt, wenn die letztere nicht im Ausgleich ist, einen von einem Ausgangssignal des Operationsverstaerkers eingeschalteten Transistor (TR2), welcher abgeschaltet ist, wenn kein Ausgangssignal von dem Operationsverstaerker eintritt, und einen zweiten mit dem Betaetigungsschalter eines Relais (RL1) verbundenen Transistor (TR3) enthaelt, dadurch gekennzeichnet dass die Wheatstonebruecke ausgeglichen ist, wenn die Fotozelle nicht der Lichtbestrahlung ausgesetzt und das Relais ein Doppelrelais (RL1) mit Wechselkontakten (NA, NC) ist, welches, wenn nicht betaetigt, die Kontakte (NA) zur Fernlichtschaltung schliesst, und die Kontakte (NC) zur Abblendlichtschaltung oeffnet und welches, wenn ausgeschaltet, die Kontakte (NA) des Fernlichts oeffnet und die Kontakte (NC) des Abblendlichts schliesst, und der zweite Transistor (TR3) eingeschaltet ist, um das Relais (RL1) zu betaetigen, wenn der Transistor (TR2) abgeschaltet ist, und besagter Transistor (TR3) abgeschaltet ist, um das Relais (RL1) auszuschalten, wenn der erste Transistor (TR2) eingeschaltet ist, wobei, wenn die Fotozelle (1) der Lichtbestrahlung eines aus entgegengesetzter Richtung kommenden Fahrzeugs ausgesetzt ist, die Wheatstonebruecke nicht im Ausgleich ist und die Scheinwerfer automatisch von Fernlicht zu Abblendlicht umgeschaltet werden.

2. Das Geraet gemaess Patentanspruch 1, zusaetzlich einen dritten Transistor (TR1) enthaltend, dessen Base und Kollektor jeweils mit einem Ende der Fotozelle (1) verbunden sind, und dessen Emitter mit der Wheatstonebruecke ($R_2$, $R_3$, $R_4$) verbunden ist, so dass der Ausgleich besagter Bruecke sich nur aendert, wenn der elektrische Widerstand der der Lichtbestrahlung ausgesetzten Fotozelle unter einen bestimmten Schwellenwert sinkt.

0 055 227

TO HEADLIGHTS